# EUROPEAN PATENT SPECIFICATION

(11) **EP 2 784 118 B1**
(45) Date of publication and mention of the grant of the patent: **03.02.2016**
(21) Application number: 12851679.6
(22) Date of filing: 07.11.2012
(51) Int. Cl.: C08L 33/12, C08L 51/06, C08L 67/02

(54) **MOLDING MATERIAL AND HOUSEHOLD EQUIPMENT USING SAME FOR PLACES WHERE WATER IS USED**
FORMMASSE UND HAUSHALTSVORRICHTUNGEN ZU IHRER VERWENDUNG AN WASSERVERWENDUNGSORTEN
MATÉRIAU DE MOULAGE ET ÉQUIPEMENT MÉNAGER L'UTILISANT, DESTINÉS À DES EMPLACEMENTS OÙ L'ON UTILISE DE L'EAU

(30) Priority: 21.11.2011 JP 2011254435
(43) Date of publication of application: 01.10.2014
(73) Proprietor: Panasonic Corporation, Osaka 571-8501 (JP)
(72) Inventor: WATANABE, Koichi, Chuo-ku, Osaka 540-6207 (JP); MATSUMURA, Koichi, Chuo-ku, Osaka 540-6207 (JP); UCHIO, Tomoki, Sodegaura-shi Chiba 229-0205 (JP); TATEMATSU, Hiroaki, Sodegaura-shi Chiba 229-0205 (JP)
(74) Representative: Müller-Boré & Partner Patentanwälte PartG mbB
(86) International application number: PCT/JP2012/078892
(87) International publication number: WO 2013/077185

(56) References cited:
- EP-A2- 0 342 780
- WO-A1-2011/024828
- WO-A1-2011/118494
- WO-A1-2011/118494
- JP-A- 2002 047 397
- JP-A- 2008 088 204

## Description

### Technical Field

The present invention relates to a molding material prepared by using a polymethyl methacrylate resin and a polytrimethylene terephthalate resin as thermoplastic resins and a household equipment using same for places where water is used.

### Background Art

Conventionally known thermoplastic resins such as a polypropylene resin, a polybutylene terephthalate resin, and a polymethyl methacrylate resin have been used for fabricating a household equipment for places where water is used such as a toilet, a hand wash basin or a face wash basin.

The thermoplastic resin has readily molding characteristics and has a cost advantage. However, the thermoplastic resin has disadvantages as well as advantages in physical property. Accordingly, the thermoplastic resin has been rarely used often for fabricating the household equipment for places where water is used exemplified above. The use of the thermoplastic resin is limited depending on the kind thereof.

For example, the polypropylene resin has superior chemical resistance and superior solvent resistance, but has low surface hardness. For this reason, it has been used mainly for fabricating such as a toilet for care (a toilet) of household equipments for places where water is used.

The polybutylene terephthalate resin has superior chemical resistance and superior solvent resistance, but has low surface hardness and inferior durability of water-resistance. For this reason, it has been used mainly for fabricating such as a hand wash basin of household equipments for places where water is used.

The polymethyl methacrylate resin has superior water resistance and superior weather resistance, and further, it has superior surface hardness compared to the polypropylene resin and the polybutylene terephthalate resin. In these points, the polymethyl methacrylate resin has the advantages as the household equipment for places where water is used. However, it has inferior solvent resistance. For this reason, it has been used mainly for fabricating such as a household toilet of household equipments for places where water is used.

WO2011 118494 discloses household equipments obtained by molding compositions comprising PMMA and polytrimethylene terephthalate.

As a technique of utilizing the advantages as the household equipment for places where water is used of the polymethyl methacrylate resin and improving the solvent resistance, a molding material prepared by using a polytrimethylene terephthalate resin in combination with a polymethyl methacrylate resin has been suggested in Patent Literature 1.

In the molding material, the advantages as the household equipment for places where water is used of the polymethyl methacrylate resin such as surface hardness and water resistance are maintained, and the use thereof in combination with the polytrimethylene terephthalate resin allows solvent resistance sufficient as the household equipment for places where water is used to be obtained.

### Citation List

### Patent Literature

Patent Literature 1: JP 2011-202027 A

### Summary of Invention

### Technical Problem

However, in the molding material of Patent Literature 1, there is a problem such that color unevenness occurs on the surface of a molded product.

Firstly, the melting point of the polymethyl methacrylate resin is different from that of the polytrimethylene terephthalate resin. Secondly, the polymethyl methacrylate resin is an amorphous resin, while the polytrimethylene terephthalate resin is a crystalline resin.

The polymethyl methacrylate resin and the polytrimethylene terephthalate resin are formed after mixing the reins and pelletizing the mixture. Due to the first and second points, it is difficult to completely mix these resins. As a result, color unevenness occurs on the surface of a molded product.

Thus, there has been a need for a technique of improving the appearance of a molded product of a molding material prepared by using a polymethyl methacrylate resin and a polytrimethylene terephthalate resin. In general, a technique for uniformly mixing a plurality of kinds of resins using a compatibilizer is known. On the other hand, it has a bad influence on physical property such as strength in many cases. Therefore, there has been a need for a technique of improving the appearance of a molded product while suppressing deterioration of physical property such as strength.

The present invention has been made under such circumstances.
The object thereof is to provide a molding material which contains a polymethyl methacrylate resin and a polytrimethylene terephthalate resin as thermoplastic resins, and which can improve the appearance of a molded product while suppressing deterioration in physical property such as strength as well as a household equipment using the molding material for places where water is used.

### Solution to Problem

In order to solve the problem, the molding material of the present invention comprises a polymethyl methacrylate resin and a polytrimethylene terephthalate resin as thermoplastic resins, and comprises a graft copolymer having an olefinic polymer as a main chain and a meth(acryl)-based polymer as a side chain as a compatibilizer for the thermoplastic resins.

In the molding material, the olefinic polymer is preferably a copolymer prepared by polymerizing α-olefin with at least one selected from unsaturated carboxylic acid alkyl ester, unsaturated carboxylic acid glycidyl ester, and fatty acid vinyl ester.

In the molding material, the meth(acryl)-based polymer is preferably a homopolymer or copolymer of meth(acrylic)acid alkyl ester having an alkyl group with 1 to 8 carbon atoms.

In the molding material, the compounding ratio of the polymethyl methacrylate resin to the polytrimethylene terephthalate resin is preferably in the mass ratio range of 90:10 to 50:50.

In the molding material, the compounding ratio of the thermoplastic resin and the compatibilizer is preferably in the mass ratio range of 100:1 to 100:10.

The household equipment for places where water is used of the present invention is characterized by being obtained by forming the molding material.

### Advantageous Effects of Invention

According to the molding material and household equipment for places where water is used of the present invention, the molding material comprising a polymethyl methacrylate resin and a polytrimethylene terephthalate resin as thermoplastic resins can improve the appearance of a molded product while suppressing deterioration in physical property such as strength.

### Description of Embodiments

Hereinafter, the present invention will be described in detail.

In the present specification, the term "meth(acryl)" means "methacryl" or "acryl".

As described above, due to the difference in melting point between the melting point of the polymethyl methacrylate resin and the polytrimethylene terephthalate resin and the difference between the amorphous resin and the crystalline resin, it is difficult to completely mix the resins during preparation of pellets and color unevenness occurs on the surface of the molded product.

The present invention is characterized by using a graft copolymer having an olefinic polymer as a main chain and a meth(acryl)-based polymer as a side chain as a compatibilizer of these thermoplastic resins. When this compatibilizer is used, the polytrimethylene terephthalate resin which is a crystalline resin is solubilized (alloyed) in the polymethyl methacrylate resin which is an amorphous resin as the main component. Thus, the resins can be uniformly mixed and the appearance of a molded product can be improved.

Further, the use of the compatibilizer allows deterioration in physical property such as strength due to the compounding of the compatibilizer to be suppressed.

When the thermoplastic resin prepared by using the polytrimethylene terephthalate resin in combination with the polymethyl methacrylate resin as a main component is used, advantages of the polymethyl methacrylate resin such as surface hardness and water resistance are maintained and the solvent resistance is also improved.

In the present invention, a homopolymer of methyl methacrylate or a copolymer of methyl methacrylate with another monomer may be used as the polymethyl methacrylate resin to be used for the thermoplastic resin.

The copolymer of methyl methacrylate with another monomer preferably contains 80% by mass or more of a methyl methacrylate unit. As another monomer which is used with methyl methacrylate, for example, meth(acrylic)acid alkyl ester or an aromatic vinyl monomer such as styrene or α-methylstyrene may be used. These may be used alone or in combination.

An acrylic acid alkyl ester having an alkyl group with 1 to 18 carbon atoms is preferred. Specifically, examples thereof which may be used include acrylic acid alkyl esters having an alkyl group such as a methyl group, an ethyl group, an n-propyl group, an n-butyl group, a 2-ethylhexyl group, a dodecyl group or a stearyl group. These may be used alone or in combination.

A methacrylic acid alkyl ester having an alkyl group with 2 to 18 carbon atoms is preferred. Specifically, examples thereof which may be used include methacrylic acid alkyl esters having an alkyl group such as an ethyl group, an n-propyl group, an n-butyl group, a 2-ethylhexyl group, a dodecyl group or a stearyl group. These may be used alone or in combination.

The weight average molecular weight of the polymethyl methacrylate resin is appropriately determined taking into consideration the flowability during molding and processing, the chemical resistance, the strength of the molded product. For example, the weight is in the range of 70000 to 170000, as measured by using polystyrene as a standard sample by gel permeation chromatography (GPC). The GPC measurement may be performed, for example, under the following conditions. Device: HLC-8120GPC, manufactured by TOSOH CORPORATION
Eluent: chloroform
Detector: differential refractometer
Temperature: 40°C

The method for producing a polymethyl methacrylate resin is not particularly limited. For example, it may be produced by a known radical polymerization method such as bulk polymerization, solution polymerization, or suspension polymerization.

In the present invention, examples of the polytrimethylene terephthalate resin may include resins prepared by mainly using terephthalic acid as an acid component and mainly using trimethylene glycol as a glycol component.

Examples of another acid component other than the terephthalic acid include aromatic dicarboxylic acid such as phthalic acid, isophthalic acid, 2,6-naphthalene dicarboxylic acid, diphenyldicarboxylic acid, diphenyl ether dicarboxylic acid, difenoxicarboxylic acid, diphenylmethanedicarboxylic acid, diphenyl ketone dicarboxylic acid, and diphenyl sulfone dicarboxylic acid; aliphatic dicarboxylic acid such as succinic acid, adipic acid, and sebacic acid; alicycle dicarboxylic acid such as cyclohexanedicarboxylic acid; and oxydicarboxylic acid such as ε-oxycaproic acid, hydroxybenzoic acid, and hydroxy ethoxy benzoic acid. These may be used alone or in combination. In this regard, the amount of terephthalic acid is preferably 80 mol% or more based on the acid component.

Examples of the trimethylene glycol which may be used include 1,3-propanediol, 1,2-propanediol, 1,1-propanediol, and 2,2-propanediol. These may be used alone or in combination. Among them, 1,3-propanediol is preferred from the viewpoint of stability. The amount of 1,3-propanediol is preferably 80 mol% of the glycol component.

The trimethylene glycol may be derived from a plant. Usage of the plant-derived trimethylene glycol allows to reduce the load on the environment.

Examples of another glycol component which may be used include ethylene glycol, tetramethylene glycol, pentamethylene glycol, hexamethylene glycol, octamethylene glycol, neopentyl glycol, cyclohexane dimethanol, xylylene glycol, diethylene glycol, polyoxyalkylene glycol, and hydroquinone. These may be used alone or in combination.

In the polytrimethylene terephthalate resin, a branching component may be copolymerized. Examples of the branching component which may be used include trifunctional or tetrafunctional acid having ester formation capability such as tricarballylic acid, trimesic acid, and trimellitic acid; and trifunctional or tetrafunctional alcohol having ester formation capability, such as gycerin, trimethylolpropane, and pentaerythritol. These may be used alone or in combination. In this case, the amount of the branching component is preferably 1 mol% or less based on the total amount of the dicarboxylic acid component.

Preferably, the weight average molecular weight of the polytrimethylene terephthalate resin is, for example, in the range of 5000 to 100000, as measured by the above method (the same method with measuring the polymethyl methacrylate resin).

The method for producing the polytrimethylene terephthalate resin is not particularly limited, and it can be produced, for example, by the following processes. First, the terephthalic acid or ester-forming derivative thereof (for example, lower alkyl ester such as dimethyl ester or monomethyl ester) and the trimethylene glycol or ester-forming derivative thereof are heated to react with each other under proper temperature and time in the presence of a catalyst. Then, the poly trimethylene terephthalate resin is produced by polycondensation reaction of the glycol ester of the terephthalic acid to a desired polymerization degree under proper temperature and time in the presence of a catalyst.

Preferably, the molding material of the present invention contains a thermoplastic resin comprising the polymethyl methacrylate resin and the polytrimethylene terephthalate resin in a mass ratio of 90:10 to 50:50.

In case that the mass ratio of the polytrimethylene terephthalate resin is 10 or more, solvent resistance sufficient for use in the household equipment for places where water is used is obtained. In case that the mass ratio of the polymethyl methacrylate resin is 50 or more, the surface hardness or the water resistance sufficient for use in the household equipment for places where water is used is obtained.

The molding material of the present invention contains a graft copolymer having an olefinic polymer as a main chain and a meth(acryl)-based polymer as a side chain as a compatibilizer.

As the olefinic polymer, a copolymer prepared by polymerizing α-olefin with at least one selected from unsaturated carboxylic acid alkyl ester, unsaturated carboxylic acid glycidyl ester, and fatty acid vinyl ester may be used. Further, a homopolymer or copolymer prepared by polymerizing α-olefin may be used.

Examples of the α-olefin which may be used include ethylene, propylene, and butene-1. These may be used alone or in combination. Among them, the ethylene is preferred.

Examples of the unsaturated carboxylic acid alkyl ester which may be used include alkyl esters of monocarboxylic acids having 3 to 10 carbon atoms. The alkyl group of the unsaturated carboxylic acid alkyl ester preferably has 1 to 5 carbon atoms.

Specifically, examples of the unsaturated carboxylic acid alkyl ester which may be used include methyl acrylate, ethyl acrylate, propyl acrylate, butyl acrylate, methyl methacrylate, ethyl methacrylate, propyl methacrylate, and butyl methacrylate. These may be used alone or in combination.

Examples of the unsaturated carboxylic acid glycidyl ester which may be used include glycidyl esters of monocarboxylic acids having 3 to 10 carbon atoms. Specifically, examples thereof which may be used include acrylic acid glycidyl ester, methacrylic acid glycidyl ester, and ethacrylic acid glycidyl ester. These may be used alone or in combination. Among them, the glycidyl methacrylate ester is preferred.

Examples of the fatty acid vinyl ester which may be used include vinyl esters of fatty acids having 4 to 8 carbon atoms. Specifically, examples thereof which may be used include vinyl acetate, vinyl butyrate, and vinyl propionate. These may be used alone or in combination. Among them, the vinyl acetate is preferred.

The olefinic polymer may be produced by a known method, for example, radical polymerization of a corresponding monomer.

Among them, the copolymer prepared by polymerizing α-olefin with at least one selected from unsaturated carboxylic acid alkyl ester, unsaturated carboxylic acid glycidyl ester, and fatty acid vinyl ester is preferred as the olefinic polymer. The use of these copolymers allows particularly a good balance between the improvement in the appearance of the molded product and the suppression of deterioration in physical property such as strength of the molded product to be achieved.

Such copolymers are preferably prepared by copolymerizing 70 to 99% by mass of α-olefin with 1 to 30% by mass of at least one selected from unsaturated carboxylic acid alkyl ester, unsaturated carboxylic acid glycidyl ester, and fatty acid vinyl ester. The use of this range allows particularly a good balance between the improvement in the appearance of the molded product and the suppression of deterioration in physical property such as strength of the molded product to be achieved.

As the olefinic polymer, random copolymers such as ethylene-acrylic acid copolymer, ethylene-methacrylic acid copolymer, ethylene-acrylic acid-ethyl acrylate copolymer, ethylene-ethyl acrylate copolymer, ethylene-vinyl acetate copolymer, ethylene-vinyl acetate-ethyl acrylate copolymer, and ethylene-methacrylic acid glycidyl ester copolymer may be preferably used. These may be used alone or in combination.

The meth(acryl)-based polymer constituting the side chain of the graft copolymer is a homopolymer of meth(acrylic)acid alkyl ester or a copolymer formed of two or more kinds.

The meth(acryl)-based polymer is preferably a homopolymer or copolymer of meth(acrylic)acid alkyl ester having an alkyl group with 1 to 8 carbon atoms.

The use of the meth(acryl)-based polymer allows particularly a good balance between the improvement in the appearance of the molded product and the suppression of deterioration in physical property such as strength of the molded product to be achieved.

Specifically, examples of the meth(acrylic)acid alkyl ester which may be used include methyl acrylate, ethyl acrylate, propyl acrylate, butyl acrylate, methyl methacrylate, ethyl methacrylate, propyl methacrylate, and butyl methacrylate. These may be used alone or in combination.

Examples of the meth(acryl)-based polymer which may be used include polymethyl methacrylate, polyethyl acrylate, polybutyl acrylate, polyacrylic acid-2-ethylhexyl, butyl acrylate-methyl methacrylate copolymer, and butyl acrylate-styrene copolymer. These may be used alone or in combination. Among them, the butyl acrylate-methyl methacrylate copolymer is preferred.

The meth(acryl)-based polymer may be produced by a known method, for example, radical polymerization of a corresponding monomer.

The ratio of the olefinic polymer constituting a graft copolymer and the meth(acryl)-based polymer is preferably in a mass ratio of 95:5 to 5:95, more preferably in a mass ratio of 80:20 to 20:80. The use of such a range allows particularly a good balance between the improvement in the appearance of the molded product and the suppression of deterioration in physical property such as strength of the molded product to be achieved.

The graft copolymer may be produced by a known method such as a chain transfer method or an ionizing radiation irradiating method. For example, it may be produced by a grafting reaction of polymers each other, in which a grafted precursor, prepared by copolymerizing a monomer of the side chain component with a radical(co)polymerizable organic peroxide is melt kneaded in a main chain component particle.

The molding material of the present invention contains the polymethyl methacrylate resin and the polytrimethylene terephthalate resin as thermoplastic resins and contains the graft copolymer as a compatibilizer for the resins. The compounding ratio of the thermoplastic resin and the compatibilizer is preferably in the mass ratio range of 100:1 to 100:10, more preferably in the mass ratio range of 100:2 to 100:8.

The use of such a range allows particularly a good balance between the improvement in the appearance of the molded product and the suppression of deterioration in physical property such as strength of the molded product to be achieved.

The molding material of the present invention may contain another thermoplastic resin other than the polymethyl methacrylate resin and the polytrimethylene terephthalate resin within the range not impairing the effect of the present invention. Examples of another thermoplastic resin which may be used include olefinic resin such as polycarbonate resin, polyethylene resin, polypropylene resin; styrene-based resin such as polystyrene resin, rubber-reinforced polystyrene resin, acrylonitrile-styrene copolymer resin, and ABS resin; polyacetal resin, polyamide resin, modified polyphenylene oxide resin, polyphenylene sulfide resin, fluorine resin, and silicon resin.

Taking into consideration the use of other thermoplastic resins for the household equipment for places where water is used and the effect of the present invention, the compounding amount of the resins is 20% by mass, preferably 10% by mass based on the total amount of the thermoplastic resins including the polymethyl methacrylate resin and the polytrimethylene terephthalate resin.

The molding material of the present invention may contain addition ingredients other than the thermoplastic resin and the compatibilizer within the range not impairing the effect of the present invention. Examples of the addition ingredients include an antioxidant, a heat stabilizer, a mold release agent, a lubricant, a weather resistant agent. Taking into consideration the use thereof for the household equipment for places where water is used and the effect of the present invention, the compounding amount of the addition ingredients exemplified herein is 10% by mass or less, preferably 1% by mass or less based on the total amount of the thermoplastic resin.

The molding material of the present invention may contain a granular or fibrous inorganic filler and a colorant such as pigment or dye, in addition to the above addition ingredients within the range not impairing the effect of the present invention. Taking into consideration the use thereof for the household equipment for places where water is used and the effect of the present invention, the compounding amount of the inorganic filler is 30% by mass or less, preferably 10% by mass or less based on the total amount of the thermoplastic resin. Taking into consideration the use thereof for the household equipment for places where water is used and the effect of the present invention, the compounding amount of the colorant is 5% by mass or less, preferably 1 % by mass or less based on the total amount of the thermoplastic resin.

The molding material of the present invention may be obtained in a pellet form by combining the above thermoplastic resins, the compatibilizer, and the other addition components if needed, mixing them in a molten state with heat using a biaxial kneader, cooling the resulting product, and cutting it into a desired shape.

The molding material of the present invention is not particularly limited as long as it contains a polymethyl methacrylate resin and a polytrimethylene terephthalate resin as thermoplastic resins and contains a graft copolymer having an olefinic polymer as a main chain and a meth(acryl)-based polymer as a side chain as a compatibilizer for the thermoplastic resins. For example, not only a full compound prepared by melt-kneading a compound material which is substantially the same as the molded product with an extruder and so on, but also a masterbatch in which some materials are highly concentrated, and a combination of the masterbatch and a thermoplastic resin for dilution (dry blend) are included.

The compounding ratio of the masterbatch in which some materials are highly concentrated is not particularly limited. For example, the compounding ratio of the polymethyl methacrylate resin and the polytrimethylene terephthalate resin is preferably in the mass ratio range of 1:99 to 99:1, more preferably in the mass ratio range of 1:99 to 50:50. Further, the masterbatch may contain a pigment, an additive or the like, in addition to some materials.

In the masterbatch, the compounding ratio of the thermoplastic resin and the compatibilizer is not particularly limited. For example, it is preferably in the weight ratio range of 100:1 of 100:100, more preferably in the weight ratio range of 100:5 to 100:20.

The molding material thus prepared is molded, for example, by injection molding or extrusion molding, thereby various kinds of molded products such as household equipments for places where water is used can be fabricated.

In the household equipment for places where water is used of the present invention, the polymethyl methacrylate resin of the main component is used, and thus the advantages as the household equipment for places where water is used of the polymethyl methacrylate resin, such as surface hardness, water resistance, and weather resistance are maintained. Further, is allowed to have solvent resistance, especially chemical crack resistance, resulting from the combination of the polytrimethylene terephthalate resin. The compatibilizer is used so that the appearance of a molded product can be improved while suppressing deterioration of physical property such as strength.

Therefore, the household equipment for places where water is used of the present invention preferably includes a toilet such as a toilet for care or a household toilet; a hand wash basin; a face wash basin; a wash-related small article such as a toothbrush rack, a bathroom shelf, a bathtub, and a bathroom small article such as a soap case.

### EXAMPLES

Hereinafter, the present invention will be described more in detail with reference to Examples, however, the present invention is not limited thereto.

The used thermoplastic resins and compatibilizers are as follows:
(Thermoplastic resin)
▪ Polymethyl methacrylate resin (PMMA)
"Acrypet VH", manufactured by Mitsubishi Rayon Co., Ltd.
▪ Polytrimethylene terephthalate resin (PTT)
"DuPont Biomax PTT1100" (compatibilizer), manufactured by Du Pont-Mitsui Polychemicals
▪ Graft copolymer of 70 parts by mass of ethylene-ethyl acrylate copolymer (main chain) with 30 parts by mass of methyl methacrylate-butyl acrylate copolymer (side chain)
"Modiper A5300", manufactured by NOF CORPORATION.
▪ Graft copolymer of ethylene-vinyl acetate copolymer (main chain) with modified polymethyl methacrylate (side chain)
"Modiper A6600", manufactured by NOF CORPORATION.
▪ Styrene-acrylic copolymer
"ARUFON UH-2170", manufactured by TOAGOSEI CO., LTD
▪ Graft copolymer of epoxy-modified acrylic polymer (main chain) with polymethyl methacrylate resin (side chain)
Rezeda GP-301" manufactured by TOAGOSEI CO., LTD

In Examples 1 to 16 and Comparative examples 1 to 3, the thermoplastic resin and the compatibilizer were mixed with heat in the compounding amount shown in Table 1 using a biaxial kneader, and extruded into a strand shape. After cooling it, it was cut to prepare a pellet for molding.

In Comparative example 4, a pellet for molding was prepared in the same manner as described above except that only the thermoplastic resin was added without adding the compatibilizer.

The test piece was produced with an injection molding machine by using the pellet for molding as the molding material. These test pieces were used to perform the following evaluations.

### [Molding appearance]

Color unevenness of each test piece was visually evaluated according to the following criteria:
○: no color unevenness is observed in the appearance;
Δ: color unevenness is slightly observed in the appearance; and
x: color unevenness in the appearance is highly visible.

### [Flexural strength]

The flexural strength (MPa) of the test piece was measured in accordance with JIS K 7171. As for the determination criteria, the case where the strength was decreased by 20% or more from the strength in the compounding ratio of PTT and PMMA (50/50) (without the compatibilizer) in Comparative example 4 was disapproved.

### [Water resistance]

Izod impact strength of an unnotched test piece was measured in accordance with JIS K 7110. Two kinds of test pieces, i.e. a non-treated piece and a warm water immersion treated piece for the evaluation of water resistance prepared by soaking the piece for 60 days in a warm water of 70°C and then drying it were used. When a decreasing rate of the izod impact strength of warm water immersion treated piece to the izod impact strength of the non-treated piece was less than 10%, it was evaluated as ○.

The evaluation results are shown in Table 1.

**[Table 1]**

| | Thermoplastic resin and blending ratio | Compatibilizer | | Molding appearance | Flexural strength | Water resistance | |
|---|---|---|---|---|---|---|---|
| | | Kind | Blending amount | | | | |
| Example 1 | PMMA(50% by mass)/PTT(50% by mass) | A5300 | 1% by mass | ○ | 97MPa | ○ | |
| Example 2 | PMMA(70% by mass)/PTT30% by mass) | A5300 | 1 % by mass | ○ | 101 MPa | ○ | |
| Example 3 | PMMA(90% by mass)/PTT(1 0% by mass) | A5300 | 1 % by mass | ○ | 103 MPa | ○ | |
| Example 4 | PMMA(50% by mass)/PTT(50% by mass) | A5300 | 5% by mass | ○ | 96MPa | ○ | |
| Example 5 | PMMA(70% by mass)/PTT30% by mass) | A5300 | 5% by mass | ○ | 99MPa | ○ | |
| Example 6 | PMMA(90% by mass)/PTT(10% by mass) | A5300 | 5% by mass | ○ | 102 MPa | ○ | |
| Example 7 | PMMA(50% by mass)/PTT(50% by mass) | A5300 | 10% by mass | ○ | 94MPa | ○ | |
| Example 8 | PMMA(70% by mass)/PTT30% by mass) | A5300 | 10% by mass | ○ | 96MPa | ○ | |
| Example 9 | PMMA(90% by mass)/PTT(10% by mass) | A5300 | 10% by mass | ○ | 98MPa | ○ | |
| Example 10 | PMMA(90% by mass)/PTT(10% by mass)*1 | A5300 | 1 % by mass | ○ | 103 MPa | ○ | |
| Example 11 | PMMA(50% by mass)/PTT(50% by mass) | A6600 | 1% by mass | ○ | 97MPa | ○ | |
| Example 12 | PMMA(50% by mass)/PTT(50% by mass) | A6600 | 10% by mass | ○ | 92MPa | ○ | |
| Example 13 | PMMA(70% by mass)/PTT30% by mass) | A6600 | 1% by mass | ○ | 98MPa | ○ | |
| Example 14 | PMMA(70% by mass)/PTT30% by mass) | A6600 | 10% by mass | ○ | 94MPa | ○ | |
| Example 15 | PMMA(90% by mass)/PTT(10% by mass) | A6600 | 1% by mass | ○ | 102MPa | ○ | |
| Example 16 | PMMA(90% by mass)/PTT(10% by mass) | A6600 | 10% by mass | ○ | 96MPa | ○ | |
| Comparative example 1 | PMMA(50% by mass)/PTT(50% by mass) | UH-2170 | 5% by mass | × | 95MPa | ○ | ⇒disapproved because of poor molding appearance |
| Comparative example 2 | PMMA(50% by mass)/PTT(50% by mass) | UH-2170 | 10% by mass | Δ | 73MPa | ○ | ⇒disapproved because of poor molding appearance |
| Comparative example 3 | PMMA(50% by mass)/PTT(50% by mass) | GP-301 | 5% by mass | × | 93MPa | ○ | ⇒disapproved because of poor molding appearance |
| Comparative example 4 | PMMA(50% by mass)/PTT(50% by mass) | None | - | × | 100MPa | ○ | ⇒disapproved because of poor molding appearance |

| | | | | | | | |
|---|---|---|---|---|---|---|---|
| *1) PMMA, PTT, and A5300 were masterbatched at a blending ratio of 50:45:5 and PMMA (80%) was dry-blended to prepare a molded product. | | | | | | | |

According to Table 1, in Examples 1 to 16 in which PMMA and PTT were used as thermoplastic resins and a graft copolymer having an olefinic polymer as a main chain and a meth(acryl)-based polymer as a side chain was used as a compatibilizer for the resins, any immiscible portion was not observed in the appearances of the molded products and the materials were uniformly dispersed. As a result, color unevenness was not observed in the appearances of the molded products.

In Examples 1 to 16, even if the compatibilizer was added, the flexural strength was not decreased and the water resistance was not decreased as compared to Comparative example 4 in which the compatibilizer was not added. In this regard, the solvent resistance (chemical crack resistance: critical distortion) was evaluated by the same method as Examples in Patent Literature 1, and the solvent resistance was also good. Further, the surface hardness and decontamination performance were sufficient for the household equipment for places where water is used.

In Example 10, a masterbatch in which some materials of Example 3 were highly concentrated was produced. PMMA was dry-blended with the masterbatch to prepare a molding material. Any immiscible portion was not observed in the appearance of even such a molded product and the materials were uniformly dispersed. As a result, color unevenness was not observed in the appearance of the molded product. Further, the solvent resistance was good. The surface hardness and decontamination performance were also sufficient for the household equipment for places where water is used.

On the other hand, in Comparative examples 1 and 3 in which other compatibilizers different from the graft copolymer were used in amounts equal to those in Examples 4 to 6, no improvement was observed in the appearances of the molded products.

Particularly, in Comparative example 3, a graft copolymer whose main and side chains were meth(acryl)-based polymers was used, however, no improvement was observed in the appearance of the molded product. This shows that, like Examples 1 to 16, the graft copolymer having an olefinic polymer as a main chain and a meth(acryl)-based polymer as a side chain is essential to improve the appearance of the molded product.

In Comparative example 2, the compounding amount of the compatibilizer was increased from that in Comparative example 1 and an improvement tendency was slightly observed in the appearance of the molded product. However, color unevenness remained, and further the flexural strength was significantly decreased.

As described above, in order to improve the appearance of the molded product without reducing physical property such as strength, the graft copolymer having an olefinic polymer as a main chain and a meth(acryl)-based polymer as a side chain is suitable as the compatibilizer.

## Claims

1. A molding material comprising:
a polymethyl methacrylate resin and a polytrimethylene terephthalate resin as thermoplastic resins; and
a graft copolymer having an olefinic polymer as a main chain and a meth(acryl)-based polymer as a side chain as a compatibilizer for the thermoplastic resins.

2. The molding material according to claim 1, wherein the olefinic polymer is a copolymer prepared by polymerizing α-olefin with at least one selected from unsaturated carboxylic acid alkyl ester, unsaturated carboxylic acid glycidyl ester, and fatty acid vinyl ester.

3. The molding material according to claim 1 or 2, wherein the meth(acryl)-based polymer is a homopolymer or copolymer of meth(acrylic)acid alkyl ester having an alkyl group with 1 to 8 carbon atoms.

4. The molding material according to any one of claims 1 to 3, wherein the compounding ratio of the polymethyl methacrylate resin and the polytrimethylene terephthalate resin is in the mass ratio range of 90:10 to 50:50.

5. The molding material according to any one of claims 1 to 4, wherein the compounding ratio of the thermoplastic resin and the compatibilizer is in the mass ratio range of 100:1 to 100:10.

6. A household equipment for places where water is used prepared by molding the molding material according to any one of claims 1 to 5.

## Patentansprüche

1. Formmasse, umfassend
ein Polymethylmethacrylatharz und ein Polytrimethylenterephthalatharz als thermoplastische Harze und
ein Pfropfcopolymer mit einem olefinischen Polymer als eine Hauptkette und einem Meth(acryl)-basierten Polymer als eine Seitenkette als ein Kompatibilisierer für die thermoplastischen Harze.

2. Formmasse nach Anspruch 1, wobei das olefinische Polymer ein Copolymer, hergestellt durch das Polymerisieren eines α-Olefins mit mindestens einem, ausgewählt aus ungesättigtem Carbonsäurealkylester, ungesättigtem Carbonsäureglycidylester und Fettsäurevinylester, ist.

3. Formmasse nach Anspruch 1 oder 2, wobei das Meth(acryl)-basierte Polymer ein Homopolymer oder Copolymer eines Meth(acryl)säurealkylesters mit einer Alkylgruppe mit 1 bis 8 Kohlenstoffatomen ist.

4. Formmasse nach einem der Ansprüche 1 bis 3, wobei das Mischverhältnis des Polymethylmethacrylatharzes und des Polytrimethylenterephthalatharzes in dem Massenverhältnisbereich von 90:10 bis 50:50 liegt.

5. Formmasse nach einem der Ansprüche 1 bis 4, wobei das Mischverhältnis des thermoplastischen Harzes und des Kompatibilisierers in dem Massenverhältnisbereich von 100:1 bis 100:10 liegt.

6. Haushaltsausstattung für Orte, an denen Wasser verwendet wird, hergestellt durch das Formen der Formmasse nach einem der Ansprüche 1 bis 5.

## Revendications

1. Matériau de moulage comprenant :
une résine de polyméthacrylate de méthyle et une résine de polytéréphtalate de triméthylène en tant que résines thermoplastiques ; et
un copolymère greffé ayant un polymère oléfinique comme chaîne principale et un polymère à base de méthacryle comme chaîne latérale en tant que compatibilisant pour les résines thermoplastiques.

2. Matériau de moulage selon la revendication 1, où le polymère oléfinique est un copolymère préparé par polymérization d'une α-oléfine avec au moins l'un sélectionné parmi un ester alkylique d'acide carboxylique insaturé, un ester glycidylique d'acide carboxylique insaturé et un ester vinylique d'acide gras.

3. Matériau de moulage selon la revendication 1 ou 2, où le polymère à base de méthacryle est un homopolymère ou un copolymère d'ester alkylique d'acide méthacrylique ayant un groupement alkyle avec 1 à 8 atomes de carbone.

4. Matériau de moulage selon l'une quelconque des revendications 1 à 3, où le rapport de composition de la résine de polyméthacrylate de méthyle et la résine de polytéréphtalate de triméthylène est en rapport de masse dans l'intervalle allant de 90:10 à 50:50.

5. Matériau de moulage selon l'une quelconque des revendications 1 à 4, où le rapport de composition de la résine thermoplastique et du compatibilisant est en rapport de masse dans l'intervalle allant de 100:1 à 100:10.

6. Equipement ménager pour les endroits où l'eau est utilisée préparé par moulage du matériau de moulage selon l'une quelconque des revendications 1 à 5.
